# EUROPÄISCHE PATENTANMELDUNG

(11) **EP 1 516 762 A2**
(43) Veröffentlichungstag der Anmeldung: **23.03.2005**
(21) Anmeldenummer: 04020813.4
(22) Anmeldetag: 02.09.2004
(51) Int. Cl.: B60J 3/02

(54) **Frontscheibe mit einer aussen angebrachten Sonnenblende**

(30) Priorität: 20.09.2003 DE 10343686
(71) Anmelder: DaimlerChrysler AG, 70567 Stuttgart (DE)
(72) Erfinder: Janssen, Bertrand, 71034 Böblingen (DE)

(57) **Zusammenfassung**

Es wird ein Fahrzeug mit einer Frontscheibe (5), in deren oberen Randbereich außen eine mehrteilig ausgebildete, erste und zweite Blendensegmente (13,15) aufweisende Sonnenblende (11) angeordnet ist, wobei die Gesamtlänge der Blendensegmente (13,15) kleiner als die Länge der Frontscheibenoberkante (17) ist, und wobei im mittleren Bereich der Frontscheibe (5) eine Lücke (19) zwischen den Blendensegmenten (13,15) besteht, vorgeschlagen. Das Fahrzeug zeichnet sich dadurch aus, dass die Blendensegmente (13, 15) an ihren benachbart angeordneten Endbereichen jeweils keilförmig ausgebildet sind, und dass die Keilform durch einen abfallenden Verlauf der Blendensegmentlängsoberkante (21) in Richtung auf die Blendensegmentlängsunterkante (23) gebildet ist.

## Beschreibung

Die Erfindung betrifft ein Fahrzeug gemäß Oberbegriff des Anspruchs 1 sowie eine mehrteilig ausgebildete Sonnenblende gemäß Oberbegriff des Anspruchs 5.

Aus der DE 44 46 124 A1 geht ein Fahrzeug hervor, das eine Frontscheibe aufweist, an deren oberen Randbereich eine außen angebrachte Sonnenblende vorgesehen ist, die als Blendschutz des Fahrers und gegebenenfalls des Beifahrers dient. Die Sonnenblende ist in ein am oberen Randbereich des Fahrzeugs angeordnetes Windleitschild integriert. Dies führt dazu, dass für jeden Fahrzeugtyp eine speziell auf die Abmessungen, insbesondere die Breite der Frontscheibe angepasste Sonnenblende bereitgestellt werden muss.

Aus der DE 86 26 312 U1 geht eine LKW-Fahrerkabine hervor, die mit einer Frontscheibe versehen ist, wobei auf der Außenseite der Frontscheibe eine Sonnenblende vorgesehen ist, die sich über die gesamte Kabinenbreite erstreckt.

Aus der US 4 726 619 geht ein Fahrzeug der hier angesprochenen Art hervor, bei dem am oberen Randbereich der Frontscheibe außen eine mehrteilig ausgebildete, erste und zweite Blendensegmente aufweisende Sonnenblende angeordnet ist. Die Sonnenblende ist universell für Fahrzeuge mit verschieden breiten Frontscheiben einsetzbar. Zu diesem Zweck ist die Gesamtlänge der Blendensegmente kleiner als die Länge der Frontscheibenoberkante, so dass zwischen den Blendensegmenten eine Lücke besteht, die um so größer ist, je breiter die Frontscheibe ist. Die Lücke zwischen den Blendensegmenten ist mittels einer Verbindungsplatte überbrückt, wobei für jeden Fahrzeugtyp jeweils eine an die Breite der Lücke angepasste Verbindungsplatte erforderlich ist.

Es ist Aufgabe der Erfindung, eine Alternative zu dem Fahrzeug und der Sonnenblende der eingangs genannten Art zu schaffen.

Zur Lösung der Aufgabe wird ein Fahrzeug mit den Merkmalen des Anspruchs 1 vorgeschlagen. Dieses weist eine außen auf der Frontscheibe angeordnete, mehrteilig ausgebildete Sonnenblende mit ersten und zweiten Blendensegmenten auf, deren Gesamtlänge kleiner als die Länge der Frontscheibenoberkante ist. Im mittleren Bereich der Frontscheibe besteht zwischen den Blendensegmenten eine Lücke. Je breiter das Fahrzeug und somit dessen Frontscheibe ist, desto größer ist die zwischen den beiden Blendensegmenten bestehende Lücke, die sich vorzugsweise im mittleren Bereich der Frontscheibe befindet. Dadurch wird sichergestellt, dass die Funktion der Sonnenblende, nämlich Blendschutz des Fahrers und gegebenenfalls des Beifahrers, gewährleistet bleibt. Besonders vorteilhaft ist, dass die Blendensegmente universell für verschiedenen Fahrzeugtypen mit unterschiedlich breiten Frontscheiben einsetzbar sind, so dass die Variantenvielfalt der Sonnenblende reduziert ist, was insbesondere im Bereich der Herstellung, Montage und Lagerung der Sonnenblende Kostenvorteile mit sich bringt. Das Fahrzeug zeichnet sich dadurch aus, dass die Blendensegmente an ihren benachbart angeordneten Endbereichen jeweils keilförmig ausgebildet sind, und dass die Keilform durch einen abfallenden Verlauf der Blendensegmentlängsoberkante in Richtung auf die Blendensegmentlängsunterkante gebildet ist. Auf Grund der erfindungsgemäßen Keilform wird ein bestimmter optischer Effekt erzielt, der unabhängig von der Breite der Lücke im Wesentlichen gleich bleibend ist.

Vorteilhafte Ausführungsbeispiele des Fahrzeugs ergeben sich aus Kombinationen der in den Unteransprüchen genannten Merkmale.

Zur Lösung der Aufgabe wird auch eine mehrteilig ausgebildete Sonnenblende mit den Merkmalen des Anspruchs 5 vorgeschlagen, die sich insbesondere durch ihre universelle Einsetzbarkeit für verschiedenste Fahrzeugtypen bei gleich bleibender Optik auszeichnet.

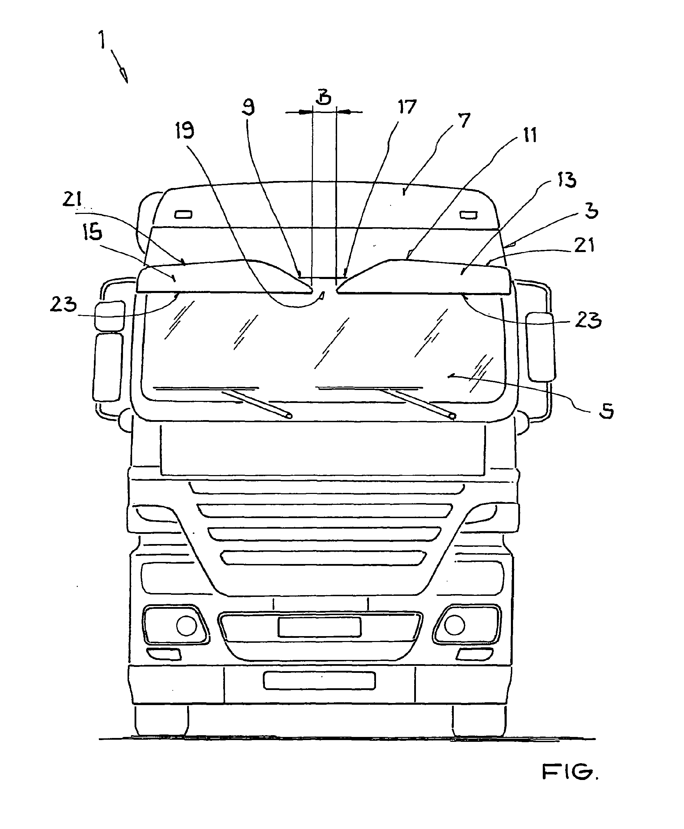

Die Erfindung wird im Folgenden anhand der einzigen Figur näher erläutert. Diese zeigt eine Vorderansicht eines Lastkraftwagens 1, der eine Fahrerkabine 3 aufweist, die mit einer Frontscheibe 5 versehen ist. Auf der Oberseite der Fahrerkabine 3 ist ein Windleitschild 7 angeordnet. Wie aus der Figur ersichtlich, erstreckt sich die Frontscheibe 5 über die gesamte Breite des Lastkraftwagens 1.

Im Bereich der Oberkante 9 der Fahrerkabine 3 ist eine Sonnenblende 11 vorgesehen, die auf der Außenseite der Frontscheibe 5 angeordnet und in geeigneter Weise befestigt ist. Die Sonnenblende 11 weist ein erstes Blendensegment 13 und eine zweites Blendensegment 15 auf, von denen - vorausgesetzt, dass der Lastkraftwagen 1 ein Linkslenker istdas erste Blendensegment 13 einem nicht dargestelltem Fahrzeuglenker und das zweite Blendensegment 15 einem neben dem Fahrzeuglenker angeordneten Beifahrerplatz zugeordnet ist. Die Blendensegmente 13, 15 sind so angeordnet, dass sie jeweils teilweise die Frontscheibe 5 und das Windleitschild 7 überdecken.

Die Blendensegmente 13, 15 weisen eine Gesamtlänge auf, die kleiner ist als die Länge der Frontscheibenoberkante 17 beziehungsweise die Kabinenbreite und sind so angeordnet, dass zwischen deren einander zugewandten Endbereichen eine Lücke 19 mit der Breite B besteht.

Wie aus der Figur ersichtlich, sind die Blendensegmente 13 und 15 in ihren benachbart angeordneten Endbereichen jeweils keilförmig ausgebildet, wobei die Keilform durch einen abfallenden Verlauf der Blendensegmentlängsoberkante 21 in Richtung auf die Blendensegmentlängsunterkante 23 gebildet ist. Diese Keilform dient insbesondere zur Erzielung eines gewünschten optischen Effekts, der im Wesentlichen gleich bleibend ist, unabhängig davon, wie breit die Lücke 19 ist.

Die vorstehend beschriebene Sonnenblende 11 ist universell für Fahrzeuge mit verschieden breiten Frontscheiben einsetzbar, wobei gilt, dass mit größer werdenden Breite der Fahrerkabine 3 beziehungsweise Frontscheibe 5 die Lücke 19 zwischen den Blendensegmenten 13 und 15 größer wird, wodurch jedoch nicht die Funktion der Sonnenblende 11 beeinträchtigt wird, da sich die Lücke 19 in etwa in der Mitte der Frontscheibe 5 befindet. Im Bereich der Lücke 19 in die Fahrerkabine 3 einfallende Sonnenstrahlung führt auf Grund der hierzu seitlich versetzten Anordnung des Fahrzeuglenkers nicht zu dessen Blendung durch Sonneneinstrahlung. Wichtig ist, dass die Gesamtlänge der Blendensegmente 13 und 15 lediglich gleich groß wie oder kleiner als die Länge der Frontscheibenoberkante 17 des Fahrzeugs 1 mit der größten Breite ist, so dass eine Überlappung der Blendensegmente 13 und 15 in der Frontscheibenmitte ausgeschlossen werden kann.

## Patentansprüche

1. Fahrzeug mit einer Frontscheibe (5), in deren oberen Randbereich außen eine mehrteilig ausgebildete, erste und zweite Blendensegmente (13,15) aufweisende Sonnenblende (11) angeordnet ist, wobei die Gesamtlänge der Blendensegmente (13,15) kleiner als die Länge der Frontscheibenoberkante (17) ist, und wobei im mittleren Bereich der Frontscheibe (5) eine Lücke (19) zwischen den Blendensegmenten (13,15) besteht,
**dadurch gekennzeichnet,**
**dass** die Blendensegmente (13, 15) an ihren benachbart angeordneten Endbereichen jeweils keilförmig ausgebildet sind, und dass die Keilform durch einen abfallenden Verlauf der Blendensegmentlängsoberkante (21) in Richtung auf die Blendensegmentlängsunterkante (23) gebildet ist.

2. Fahrzeug nach Anspruch 1,
**dadurch gekennzeichnet,**
**dass** die ersten und zweiten Blendensegmente (13,15) -in Blickrichtung auf die Frontseite des Fahrzeugs (1) gesehen- spiegelbildlich ausgebildet sind.

3. Fahrzeug nach Anspruch 1 oder 2,
**dadurch gekennzeichnet,**
**dass** in Draufsicht auf die Vorderseite des Fahrzeugs (1) gesehen, das erste Blendensegment (13) dem Fahrzeuglenker und das zweite Blendensegment (15) einem neben dem Fahrzeuglenker Platz findenden Beifahrer zugeordnet ist.

4. Fahrzeug nach einem der Ansprüche 1 bis 3,
**dadurch gekennzeichnet,**
**dass** das Fahrzeug ein Lastkraftwagen (1) ist.

5. Mehrteilig ausgebildete Sonnenblende (11) für ein Fahrzeug (1), die im montierten Zustand auf der Außenseite einer Frontscheibe (5) im Bereich der Frontscheibenoberkante (17) angeordnet ist, umfassend erste und zweite Blendensegmente (13,15), deren Gesamtlänge kleiner als die Länge der Frontscheibenoberkante (17) ist, wobei im mittleren Bereich der Frontscheibe (5) eine Lücke (19) zwischen den Blendensegmenten (13,15) besteht,
**dadurch gekennzeichnet,**
**dass** die Blendensegmente (13, 15) an ihren im montierten Zustand benachbart angeordneten Endbereichen jeweils keilförmig ausgebildet sind, und dass die Keilform durch einen abfallenden Verlauf der Blendensegmentlängsoberkante (21) in Richtung auf die Blendensegmentlängsunterkante (23) gebildet ist.
